# EUROPEAN PATENT APPLICATION

(11) **EP 1 796 088 A1**
(43) Date of publication of application: **13.06.2007**
(21) Application number: 05766313.0
(22) Date of filing: 19.07.2005
(51) Int. Cl.: G11B 7/26

(54) **OPTICAL INFORMATION RECORDING MEDIUM AND ITS MANUFACTURING METHOD**

(30) Priority: 30.08.2004 JP 2004249764
(71) Applicant: MATSUSHITA ELECTRIC INDUSTRIAL CO., LTD., Osaka 571-8501 (JP)
(72) Inventor: KITAURA, Hideki c/o Matsushita Electric Ind. Co., Chuo-ku Osaka-shi Osaka 540-6319 (JP); KOJIMA, Rie c/o Matsushita Electric Ind. Co., Ltd., Chuo-ku Osaka-shi Osaka 540-6319 (JP)
(74) Representative: Eisenführ, Speiser & Partner
(86) International application number: PCT/JP2005/013246
(87) International publication number: WO 2006/025162

(57) **Abstract**

The present invention provides a recording medium that has high reliability and affords good recording and reproduction characteristics over a wide linear velocity range and high density, as well as a method for manufacturing the recording medium. To this end, an optical information recording medium comprises at least a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order on a transparent substrate.

## Description

### TECHNICAL FIELD

The present invention relates to an optical information recording medium and a method for manufacturing the recording medium, and more particularly relates to an optical information recording medium with which information signals can be recorded and reproduced by irradiation with a laser or the like, and to a method for manufacturing the recording medium.

### BACKGROUND ART

If a thin film of a chalcogen material or the like formed on a substrate is locally heated by irradiation with laser light under different irradiation conditions, it is possible to cause the heated portion to undergo phase change between an amorphous phase and a crystalline phase with different optical constants (refractive index n and attenuation coefficient k). A great deal of research and development have gone into what are known as phase-change optical information recording media, in which this phenomenon is employed.
With a phase-change optical information recording medium, it is possible to erase existing signals while at the same time recording new signals by irradiating an information track with a laser and modulating the laser output between two power levels (recording level and erasure level) according to information signals.
With an optical information recording medium such as this, in addition to the recording layer, a protective layer composed of a dielectric material or the like with excellent heat resistance is provided on the side of the recording layer closest to the substrate (lower side) and the side opposite from the substrate (upper side) for such purposes as preventing the thermal deformation of the substrate or the evaporation of the recording layer during repeated recording, and enhancing the optical change or optical absorbancy of the recording layer by an optical interference effect. Also, a reflective layer composed of a metal/alloy material or the like is generally provided for such purposes as using the incident light more efficiently and raising the cooling rate so that the material becomes amorphous more readily.
Providing an interface layer between the recording layer and the dielectric layer has also been proposed. The role of an interface layer is to promote the crystallization of the recording layer and improve erasure characteristics, or to prevent the diffusion of atoms or molecules between the recording layer and the dielectric protective layer and improve durability in repeated recording, for example. It is also preferable for the medium to have good environmental reliability so that no separation or corrosion will occur at the recording layer.
Also, providing an optical absorption layer with a high refractive index and an appropriately high attenuation coefficient between the upper dielectric layer and the reflective layer has been proposed for such purposes as (1) adjusting the ratio of optical absorbancy between when the recording layer is crystalline and when it is amorphous, and preventing the mark shape from being distorted during overwriting, thereby raising the erasure rate, and (2) increasing the difference in reflectance between when the recording layer is crystalline and when it is amorphous, and increasing the C/N ratio (see Patent Document 1, for example).
A basic way to increase the amount of information that can be stored on a single optical information recording medium of this type is to shorten the wavelength of the laser light and/or increase the numerical aperture of the objective lens that converges the laser light, thereby reducing the spot diameter of the laser light and increasing the recording surface density. The most common approach in recent years has been to use an optical system in which the wavelength is 660 nm and the objective lens numerical aperture is about 0.6, which is typified by a recordable DVD. We have also seen the practical application of Blu-ray discs, which make use of an optical system featuring a blue laser diode with a wavelength close to 400 nm, and in which the numerical aperture is raised to about 0.85. When the numerical aperture is raised this high, the permissible amount of tilt of the optical disk is smaller, so the transparent substrate on the laser light incident side is reduced in thickness from about 0.6 mm (that of a recordable DVD) to about 0.1 mm.
A medium with a multilayer structure comprising a plurality of laminated layers for recording and reproducing information has also been proposed in order to increase the amount of information that can be stored on a single medium. With a multilayer recording medium such as this, the information layers on the side closer to the laser light source absorb light, so recording and reproduction are performed with attenuated laser light in the information layers on the side farther from the laser light source, so decreased sensitivity is a problem during recording, as are decreased reflectance and amplitude during reproduction. Therefore, with a multilayer recording medium, the information layers on the side closer to the laser light source must have higher transmissivity, and the information layers on the side farther from the laser light source must have higher reflectance, reflectance difference, and sensitivity, so that adequate recording and reproduction characteristics will be obtained under limited laser power.
Also, not only raising the recording density as mentioned above is important with an optical information recording medium, but raising the recording speed is important in order for large volumes of data to be handled in a short time. To accommodate high-speed recording, the crystallization rate of the recording layer must be raised.
As discussed above, recording speed has been on the rise in newly developed recording and reproduction devices, and there is a need for a medium that can accommodate this change. At the same time, it is also necessary to be able to record at low speed with the same medium in order to ensure interchangeability with existing drives that are only capable of recording at low speed.
For a medium to handle high-speed recording, a recording layer with a high crystallization rate has to be used as discussed above, but when such a layer is used for recording at low speed, the crystallization rate is too high. That is, the problem is that amorphitization tends not to occur, and the marks tend not to be large enough, so there is a decrease in signal amplitude. An effective way to deal with this is to quench with a reflective layer having high thermal conductivity, which allows amorphitization to occur more readily even at low recording speed.
Silver is the element with the highest thermal conductivity, and it is often used as a reflective layer material because it is less expensive than gold and the like. A thin film of silver alone is prone to corrosion, however, so other elements are usually added, and numerous alloys have been proposed. However, the larger the amount in which these are added, the lower the thermal conductivity, so it is preferable for the added amount to be as small as possible, but on the other hand a smaller added amount means the alloy will be more susceptible to corrosion. Furthermore, atom diffusion between adjacent layers can prevent the material from functioning as a recording medium, and this problem is particularly likely to occur in such cases as when the above-mentioned optical absorption layer is provided.
Patent Document 1: Japanese Unexamined Patent Publication 2000-215516

### DISCLOSURE OF THE INVENTION

It is an object of the present invention to solve the above problems and provide a recording medium that has high reliability and affords good recording and reproduction characteristics over a wide linear velocity range and high density, as well as a method for manufacturing this recording medium.
To solve the above problems, the optical information recording medium of the present invention comprises at least a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order on a transparent substrate.
As a result, a highly reliable recording medium is obtained that has good recording and reproduction characteristics over a wide linear velocity range and high density.
Also, to solve the above problems, the optical information recording medium of the present invention comprises n-number of information layers from a first information layer to an n-th information layer (where n is an integer of at least 2) on a transparent substrate, the n-th information layer comprising a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order from the side closest to the transparent substrate.
Here again, the result is that a highly reliable recording medium is obtained that has good recording and reproduction characteristics over a wide linear velocity range and high density.
With the optical information recording medium of the present invention, it is preferable if the reflective layer is in contact with the optical absorption layer.
This affords stable recording and reproduction characteristics, for example.
Also, with the optical information recording medium of the present invention, the material of the optical absorption layer contains scandium, yttrium, titanium, zirconium, hafnium, vanadium, niobium, tantalum, chromium, molybdenum, or tungsten.
This affords a more thermally stable optical absorption layer.
With the optical information recording medium of the present invention, it is preferable if a lower dielectric layer is provided between the transparent substrate and the recording layer.
This affords more stable recording and reproduction characteristics, for example.
Also, with the optical information recording medium of the present invention, it is preferable if a lower interface layer is provided between the recording layer and the lower dielectric layer.
Further, with the optical information recording medium of the present invention, it is preferable if the material of the lower interface layer contains two or more compounds selected from among compounds of the elements magnesium, calcium, yttrium, zirconium, hafnium, niobium, tantalum, chromium, molybdenum, tungsten, zinc, aluminum, gallium, indium, and silicon.
This maintains the ease of amorphitization of the recording layer during low speed recording while promoting crystallization of the recording layer during high speed recording.
With the optical information recording medium of the present invention, it is preferable if an upper dielectric layer is provided between the recording layer and the optical absorption layer.
This affords more stable recording and reproduction characteristics, for example.
Also, with the optical information recording medium of the present invention, it is preferable if an upper interface layer is provided between the recording layer and the upper dielectric layer.
Further, with the optical information recording medium of the present invention, it is preferable if the material of the upper interface layer contains two or more compounds selected from among compounds of the elements magnesium, calcium, yttrium, zirconium, hafnium, niobium, tantalum, chromium, molybdenum, tungsten, zinc, aluminum, gallium, indium, and silicon.
This maintains the ease of amorphitization of the recording layer during low speed recording while promoting crystallization of the recording layer during high speed recording.
To solve the above problems, the method of the present invention for manufacturing an optical information recording medium is a method for manufacturing an optical information recording medium comprising at least a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order on a transparent substrate, wherein the pressure during manufacture is held at 0.01 Pa or lower so that the optical absorption layer and reflective layer are not exposed to the atmosphere while being continuously formed.
This reduces defects on the film surface.
Also, to solve the above problems, the method of the present invention for manufacturing an optical information recording medium is a method for manufacturing an optical information recording medium comprising n-number of information layers from a first information layer to an n-th information layer (where n is an integer of at least 2) on a transparent substrate, the n-th information layer comprising a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order from the side closest to the transparent substrate, wherein the pressure during manufacture is held at 0.01 Pa or lower so that the optical absorption layer and reflective layer are not exposed to the atmosphere while being continuously formed.
This reduces defects on the film surface.
The present invention provides a recording medium that has high reliability and affords good recording and reproduction characteristics over a wide linear velocity range and high density, as well as a method for manufacturing this recording medium.

### BRIEF DESCRIPTION OF THE DRAWINGS

FIG. 1 is a cross-sectional diagram of an example of the structure of the optical information recording medium of the present invention;
FIG. 2 is a cross-sectional diagram of an example of the structure of the optical information recording medium of the present invention;
FIG. 3 is a cross-sectional diagram of an example of the structure of the optical information recording medium of the present invention;
FIG. 4 is a simplified diagram of an example of a recording and reproduction device used with the optical information recording medium of the present invention; and
FIG. 5 is a simplified diagram of an example of the recording pulse waveform used in recording and reproduction with the optical information recording medium of the present invention.

### NUMERICAL REFERENCE

- 1: transparent substrate
- 2: recording layer
- 3: optical absorption layer
- 4: reflective layer
- 5: protective layer
- 6: laser light
- 7: objective lens
- 8: lower dielectric layer
- 9: upper dielectric layer
- 10: lower interface layer
- 11: upper interface layer
- 12: separator layer
- 13: first information layer
- 14: n-th information layer
- 15: laser diode
- 16: half-mirror
- 17: motor
- 18: optical information recording medium
- 19: photodetector

### DETAILED DESCRIPTION OF THE PREFERRED EMBODIMENTS

### First Embodiment

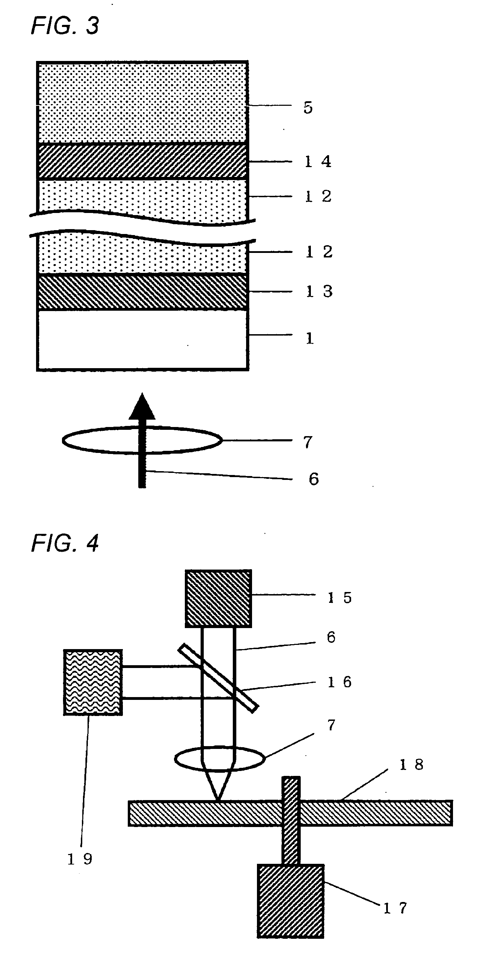

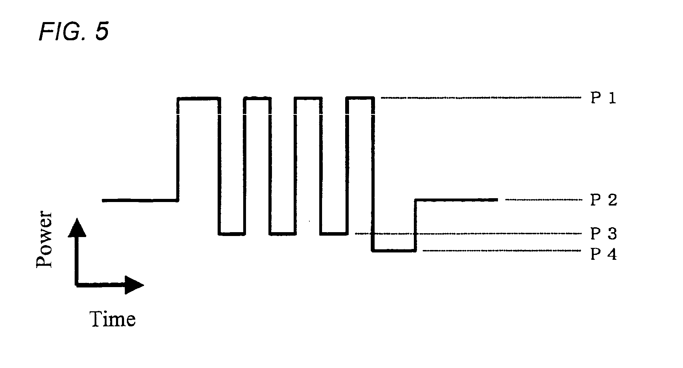

Embodiments of the present invention will now be described in specific terms through reference to the drawings.

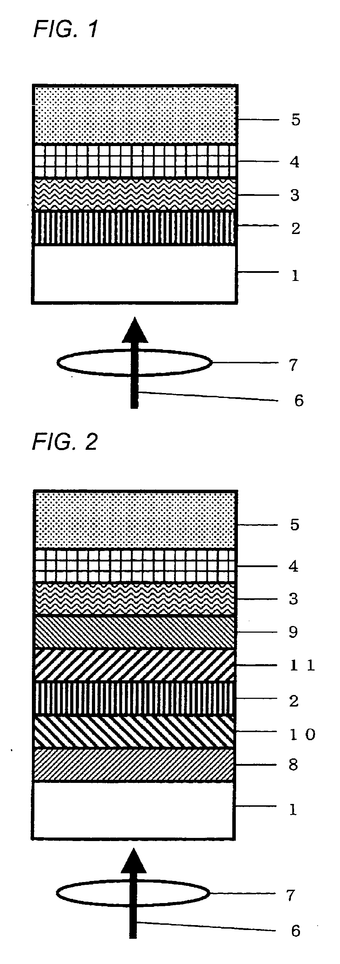

FIGS. 1 to 3 are partial cross-sectional diagrams of examples of the structure of the optical information recording medium of the present invention.
As shown in FIG. 1, in a optical information recording medium of the present invention, at least a recording layer 2, an optical absorption layer 3, a reflective layer 4, and a protective layer 5 are provided in that order on a transparent substrate 1. Recording and reproduction are performed with this optical information recording medium by converging laser light 6 with an objective lens 7 and irradiating the medium from the transparent substrate 1 side.
As shown in FIG. 2, a lower dielectric layer 8 may be provided between the transparent substrate 1 and the recording layer 2, an upper dielectric layer 9 may be provided between the recording layer 2 and the optical absorption layer 3, a lower interface layer 10 may be provided between the lower dielectric layer 8 and the recording layer 2, and an upper interface layer 11 may be provided between the recording layer 2 and the upper dielectric layer 9, as needed.
As shown in FIG. 3, the optical information recording medium of the present invention may comprise n-number of information layers from a first information layer 13 to an n-th information layer 14 (where n is an integer of at least 2) provided, with a separator layer 12 interposed, between the transparent substrate 1 and the protective layer 5. Here, at least the n-th information layer 14 must have a multilayer thin-film structure the same as that shown in FIG. 1 or 2, in order from the side closest to the transparent substrate 1. Recording and reproduction are performed by converging the laser light 6 with the objective lens 7 on each of the information layers of this optical information recording medium, and irradiating from the transparent substrate 1 side.
The transparent substrate 1 is preferably made of a material that is substantially transparent to the wavelength of the laser light 6, examples of which include polycarbonate resin, polymethyl methacrylate resin, polyolefin resin, norbornene resin, UV-setting resin, glass, and suitable combinations of these. There are no particular restrictions on the thickness of the transparent substrate 1, but a thickness of about 0.01 to 1.5 mm can be used.
Examples of the material of the lower dielectric layer 8 and the upper dielectric layer 9 include oxides of yttrium, cerium, titanium, zirconium, niobium, tantalum, cobalt, zinc, aluminum, silicon, germanium, tin, lead, antimony, bismuth, tellurium, and the like; nitrides of titanium, zirconium, niobium, tantalum, chromium, molybdenum, tungsten, boron, aluminum, gallium, indium, silicon, germanium, tin, lead, and the like; carbides of titanium, zirconium, niobium, tantalum, chromium, molybdenum, tungsten, silicon, and the like; sulfides, selenides, and tellurides of zinc, cadmium, and the like; fluorides of magnesium, calcium, lanthanum, or another rare earth element and the like; elemental carbon, silicon, germanium, and the like; and mixtures of these. Of these, a material that is substantially transparent and has low thermal conductivity is particularly favorable, such as a mixture of ZnS and SiO₂. The lower dielectric layer 8 and the upper dielectric layer 9 may have the same or different materials and compositions, as necessary.
The thickness of the upper dielectric layer 9 is preferably at least 2 nm and no more than 80 nm, and even more preferably at least 5 nm and no more than 50 nm. If the upper dielectric layer 9 is too thin, the recording layer 2 and the reflective layer 4 will be too close together, and the cooling effect of the reflective layer 4 will be so strong, and so much heat will be diffused from the recording layer 2, that the recording sensitivity will decrease and the recording layer 2 will not crystallize readily. Conversely, if the upper dielectric layer 9 is too thick, the recording layer 2 and the reflective layer 4 will be too far apart, and the cooling effect of the reflective layer 4 will be so weak, and so little heat will be diffused from the recording layer 2, that amorphitization of the recording layer 2 will tend not to proceed well. The thickness of the lower dielectric layer 8 is preferably at least 10 nm and no more than 200 nm.
Some of the materials listed above as examples of the material of the lower dielectric layer 8 and the upper dielectric layer 9 can also serve as the material of the lower interface layer 10 and the upper interface layer 11. For example, a material containing two or more compounds selected from among compounds of the elements magnesium, calcium, yttrium, zirconium, hafnium, niobium, tantalum, chromium, molybdenum, tungsten, zinc, aluminum, gallium, indium, and silicon can be used. Of these, it is particularly favorable to mix an oxide of an element selected from among zirconium, hafnium, niobium, and tantalum and an oxide of an element selected from among chromium, molybdenum, tungsten, zinc, aluminum, gallium, indium, and silicon in a molar ratio of from 1:4 to 2:1. Of the above materials, it is preferable if part of the oxide of an element selected from among zirconium, hafnium, niobium, and tantalum to be replaced with an element selected from among magnesium, calcium, and yttrium, and for the molar ratio of the two to be between 49:1 and 4:1. The ease of amorphitization of the recording layer 2 during low speed recording can be maintained while crystallization of the recording layer during high speed recording is promoted by adding the lower interface layer 10 and/or the upper interface layer 11 composed of the above-mentioned materials to a structure having the optical absorption layer 3 and the reflective layer 4. Therefore, the linear velocity range of good recording and reproduction characteristics can be expanded, and durability during repeated recording can be enhanced. There are no particular restrictions on the thickness of the lower interface layer 10 and the upper interface layer 11, but if they are too thin, they will have no effect as an interface layer, but if they are too thick, this will lead to a decrease in recording sensitivity and so forth, so a range of at least 0.2 nm and no more than 20 nm is preferable, for example. The lower interface layer 10 and the upper interface layer 11 will have their effect even if provided on just one side, but their effect will be greater if provided on both sides. If they are provided on both sides, they may have the same or different materials and compositions, as necessary.
The material of the recording layer 2 can be, for example, an alloy expressed by the general formula Geₓ(Bi_{y}Sb_{1-y})₂Teₓ₊₃ (where x ≥ 1 and 0 ≤ y ≤ 1), whose main component accounts for at least 80 at%, and preferably at least 90 at%. One or more elements selected from among tin, indium, gallium, zinc, copper, silver, gold, and chromium, or additional germanium, bismuth, antimony, tellurium, and other such metal, semi-metal, or semiconductor elements, or oxygen, nitrogen, fluorine, carbon, sulfur, boron, and other such non-metal elements may be suitably added as needed to the recording layer 2 in a compositional range of no more than 10 at%, and preferably no more than 5 at%, with respect to the entire recording layer 2, for purposes such as adjusting the crystallization rate, thermal conductivity, optical constants, and so forth, or enhancing repeated recording durability, heat resistance, and environmental reliability. A sufficient C/N ratio can be obtained if the thickness of the recording layer 2 is at least 2 nm and no more than 20 nm, and preferably at least 4 nm and no more than 14 nm. If the thickness of the recording layer 2 is less than 2 nm, adequate reflectance and reflectance change will not be obtained, so the C/N ratio will be low. If the thickness is over 20 nm, though, there will be more heat diffusion within the thin-film plane of the recording layer 2, so the C/N ratio will end up being low in high-density recording.
The material of the optical absorption layer 3 can be one with a high refractive index and one that suitably absorbs light, such as one with a refractive index n of at least 2 and no more than 6 and an attenuation coefficient k of at least 1 and no more than 4, for such purposes as (1) adjusting the ratio of optical absorbancy between when the recording layer 2 is crystalline and when it is amorphous, and preventing the mark shape from being distorted during overwriting, thereby raising the erasure rate, particularly at a high linear velocity, and (2) increasing the difference in reflectance between when the recording layer is crystalline and when it is amorphous, and increasing the C/N ratio. More preferably, n is at least 3 and no more than 5, and k is at least 1.5 and no more than 3. More specifically, a material based on silicon is suitable from an optical standpoint; and also has high heat resistance and has suitably high thermal conductivity, and is therefore suitable from a thermal standpoint as well. Silicon must be contained in an amount of at least 50 at% and no more than 95 at%, and preferably at least 60 at% and no more than 90 at%, and materials obtained by adding metal elements to silicon can be used. If the proportion of silicon is too low, thermal conductivity will be high and higher recording power will be required, so the recording marks will be too spread out and will erase part of the marks in adjacent tracks. On the other hand, if the proportion of silicon is too high, it will be difficult to form recording marks of the proper size, so the C/N ratio will end up being low. A compound of a metal element with a high melting point, such as scandium, yttrium, titanium, zirconium, hafnium, vanadium, niobium, tantalum, chromium, molybdenum, or tungsten, is favorable as the above-mentioned material because of its thermal stability. CrSi₂, MoSi₂, and so forth are especially favorable because they are more stable near their stoichiometric composition. One or more elements besides the elements listed above, selected from among oxygen, nitrogen, fluorine, carbon, sulfur, boron, and other such non-metal elements, may be suitably added as needed to the optical absorption layer 3 in a compositional range of no more than 40 at%, and preferably no more than 20 at%, and even more preferably no more than 10 at%, with respect to the entire optical absorption layer 3, for purposes such as adjusting the thermal conductivity or optical constants, or enhancing heat resistance or environmental reliability. A sufficient C/N ratio can be obtained if the thickness of the optical absorption layer 3 is at least 5 nm and no more than 100 nm, and preferably at least 10 nm and no more than 70 nm. If the thickness of the optical absorption layer 3 is less than 5 nm, there will be little difference in reflectance between when the recording layer 2 is crystalline and when it is amorphous, so the C/N ratio will be low. If the thickness is over 100 nm, though, it will be difficult for heat to escape from the recording layer 2, and it will be difficult to form recording marks of adequate size, so the C/N ratio will be low.
A silver alloy which has high thermal conductivity is preferable as the material of the reflective layer 4, and indium, just a small amount of which is very effective at preventing corrosion and reducing the particle size, is suitable as an added element in this alloy. To obtain adequate thermal conductivity, the silver content must be at least 95 at% and the indium content no more than 5 at%, and preferably the contents will be at least 98 at% silver and no more than 2 at% indium. Conversely, to prevent corrosion, silver is preferably contained in an amount of no more than 99.98 at% and indium at least 0.02 at%, and even more preferably silver no more than 99.9 at% and indium at least 0.1 at%. As a third element besides silver and indium, one or more elements selected from among oxygen, nitrogen, fluorine, carbon, sulfur, boron, and other such non-metal elements, or from among tin, gallium, zinc, copper, chromium, germanium, bismuth, antimony, tellurium, and other such metal, semi-metal, or semiconductor elements, may be suitably added as needed to the reflective layer 4 in a compositional range of no more than 5 at%, and preferably no more than 2 at%, with respect to the entire reflective layer 4, for purposes such as preventing the particle size from becoming coarse, adjusting thermal conductivity or the optical constants, or enhancing heat resistance or environmental reliability. A sufficient C/N ratio can be obtained if the thickness of the reflective layer 4 is at least 20 nm and no more than 200 nm, and preferably at least 40 nm and no more than 150 nm. If the thickness of the reflective layer 4 is less than 20 nm, it will be difficult for heat to escape from the recording layer 2, and it will be difficult to form recording marks of adequate size, so the C/N ratio will be low. If the thickness is over 200 nm, though, heat will escape very readily from the recording layer 2, and higher recording power will be necessary, so the recording marks will spread out too much and will erase part of the marks in adjacent tracks.
A reflective layer 4 composed of Ag-In may undergo atomic diffusion between layers, depending on the materials with which it is in contact. However, no atomic diffusion with a optical absorption layer 3 composed of a silicon-based material will occur even under conditions of high temperature and humidity, which allows stable recording and reproduction characteristics to be maintained.
The materials and composition of the various layers in the above-mentioned multilayer thin film can be examined by Auger electron spectroscopy, X-ray electron spectroscopy, secondary ion mass spectroscopy, or another such method. In examples of the present invention, it was confirmed that the compositions of the thin films that were actually formed were substantially the same as the target material compositions of the various layers. Nevertheless, depending on the film formation apparatus, film formation conditions, target manufacturing method, and so forth, there may be cases in which the target material composition differs from that of an actually formed thin film. In such cases, a correction coefficient that will correct the deviation in compositions is preferably determined ahead of time by rule of thumb, and the composition of the target material is determined so that a thin film of the desired composition will be obtained.
The same materials as those listed above for the transparent substrate 1 can be used as the material of the protective layer 5. Or, the material may be different from that of the transparent substrate 1, and need not necessarily be transparent to the wavelength of the laser light 6. There are no particular restrictions on the thickness of the protective layer 5, but a range of about 0.01 to 3.0 mm can be used.
A UV-setting resin or the like can be used as the separator layer 12. The thickness of the separator layer 12 must be at least equal to the focal depth determined by the wavelength λ of the laser light 6 and the numerical aperture NA of the objective lens 7 so that there will be little crosstalk from other layers in the reproduction of any layer from the first information layer 13 to the n-th information layer 14. Also, the thickness of all the information layers must be within a range that allows light convergence. For example, when λ = 660 nm and NA = 0.6, the thickness of the separator layer 12 must be at least 10 µm and no more than 100 µm, and when λ = 405 nm and NA = 0.85, the thickness must be at least 5 µm and no more than 50 µm. However, if some optical system should be developed that were capable of reducing crosstalk between layers, then this would open up the possibility of the separator layer 12 being thinner than discussed above.
The first information layer 13 must have a transmissivity of at least 30%, but need not be a rewritable type, and may also be a write-once type or a read-only type.
The amount of information that can be stored on a single medium can be doubled by using a two-sided structure in which two of the above-mentioned optical information recording media are applied with the protective layer 5 sides facing each other.
The above thin films can be formed, for example, by vacuum vapor deposition, sputtering, ion plating, CVD (Chemical Vapor Deposition), MBE (Molecular Beam Epitaxy), or another such vapor phase thin film deposition method.
The protective layer 5 may be formed or stuck after the above-mentioned thin film layers and the separator layer 12 have been sequentially formed on the transparent substrate 1. Conversely, the transparent substrate 1 may be formed or stuck after sequential formation on the protective layer 5. The latter is particularly suited to cases when the transparent substrate 1 is thinner than 0.3 mm. In such cases, a textured pattern, such as address signals, or grooves for guiding the laser light must be formed on the surface of the separator layer 12 and the protective layer 5, that is, must be transferred from something on which the desired textured pattern has already been formed, such as a stamper. Here, when a commonly used injection method is difficult to employ because of the thinness of a layer, such as the separator layer 12, a 2P process (photo-polymerization) can be used.
The pressure during manufacture is held at 0.01 Pa or lower so that the optical absorption layer 3 and reflective layer 4 are not exposed to the atmosphere while being continuously formed. This is because defects on the film surface will increase if these layers are exposed to the atmosphere.
The recording layer 2 of the optical information recording medium is generally in an amorphous state immediately after being formed. Therefore, an initialization treatment is performed in which this layer is put in a crystallization state by annealing with laser light or the like, which produces a completed disk and allows recording and reproduction to be performed.
FIG. 4 is a simplified diagram of an example of the minimum apparatus structure required for a recording and reproduction device that performs recording and reproduction using the optical information recording medium of the present invention. The laser light 6 emitted by a laser diode 15 goes through a half-mirror 16 and an objective lens 7, is focused on an optical information recording medium 18 that is being rotated by a motor 17, this reflected light is made to be incident on a photodetector 19, and a signal is detected.
In the recording of an information signal, the intensity of the laser light 6 is modulated between a plurality of power levels. Modulation of laser intensity may be accomplished by modulating the drive current of a semiconductor laser, or an electro-optical modulator, acousto-optical modulator, or other such means can be used. A single rectangular pulse of peak power P1 may be used for the portion where a mark is formed. In order to eliminate excess heat and make the mark width more uniform when a particularly long mark is to be formed, a recording pulse string composed of a string of a plurality of pulses, modulated between the peak power P 1 and the bottom power P3 shown in FIG. 5 (where P1 > P3), is used. A cooling region of cooling power P4 may be provided after the last pulse. For portions where no mark is to be formed, the power is kept constant at a bias power P2 (where P1 > P2).
Good recording and reproduction characteristics can be maintained over a wider linear velocity range if the laser power modulated pulse waveform for forming recording marks is such that the quotient of dividing the time integral of the luminescence power thereof by the maximum luminescence power is large enough for a high linear velocity. Increasing the quotient of dividing the time integral of the luminescence power thereof by the maximum luminescence power can in more specific terms be accomplished, for example, by increasing the width of some or all of the pulses of peak power P 1 in the pulse waveform shown in FIG. 6, or by raising the power level P3, and this is particularly effective at increasing the erasure rate at a high linear velocity.
Misalignment of the mark edges can occur as a result of various parameters, such as the length of the marks being recorded, and the length of the spaces before and after the marks, and this misalignment is a source of increased jitter. With the method of the present invention for recording and reproduction with an optical information recording medium, in order to prevent this misalignment and reduce jitter, the length and position of the pulses in the above-mentioned pulse string can be adjusted and compensated so that the edge positions will line up for each pattern as necessary.

### Examples

The present invention will now be described in more specific terms through examples, but the following examples are not intended to limit the present invention.

### Example 1

A piece of polycarbonate resin, with a diameter of 12 cm, a thickness of 0.6 mm, a groove pitch of 1.23 µm, and a groove depth of approximately 55 nm was readied as a transparent substrate. A lower dielectric layer with a thickness of 120 nm and composed of (ZnS)₈₀(SiO₂)₂₀, a lower interface layer with a thickness of 5 nm and composed of (ZrO₂)₄₆(Y₂O₃)₄(Cr₂O₃O)₅₀, a recording layer with a thickness of 8.5 nm and composed of Ge₄₀Sb₄Bi₄Te₅₂, an upper interface layer with a thickness of 5 nm and composed of (ZrO₂)₄₆(Y₂O₃)₄(Cr₂O₃O)₅₀, an upper dielectric layer with a thickness of 40 nm and composed of (ZnS)₈₀(SiO₂)₂₀, an optical absorption layer with a thickness of 30 nm and composed of CrSi₂, and a reflective layer with a thickness of 100 nm and composed of Ag₉₈In₂ were provided in that order on the surface of this transparent substrate where the grooves were formed, with these layers being formed by sputtering in an argon atmosphere. A protective substrate composed of polycarbonate was applied over the multilayer thin film surface formed as above, with a UV-setting resin interposed therebetween, and the UV-setting resin was cured by irradiation with UV light. The entire surface of the recording layer was then initialized by annealing with laser light from the transparent substrate side of this disk. This product was termed disk 1, and disks 2 to 13 in which the material composition of the optical absorption layer and/or the reflective layer was varied as shown in Table 1 were produced in the same manner.

**Table 1**

| Disk No. | Optical absorption layer | Reflective layer Ag + added element (added amount: at%) | 8.2 m/s recording | | | 20.5 m/s recording | |
|---|---|---|---|---|---|---|---|
| | | | Initial | | After storage | Initial | |
| | | | C/N ratio | Erasure rate | Noise increase | C/N ratio | Erasure rate |
| 1 | CrSi₂ | Ag₉₈In₂ | ○ | ⊕ | ⊕ | ⊕ | ⊕ |
| 2 | CrSi₂ | Ag_{99.5}In_{0.5} | ⊕ | ⊕ | ⊕ | ⊕ | ○ |
| 3 | CrSi₂ | Ag₉₆In₄ | ○ | ⊕ | ⊕ | ○ | ⊕ |
| 4 | CrSi₂ | Ag₉₂In₈ | Δ | ⊕ | ⊕ | Δ | ⊕ |
| 5 | CrSi₂ | Ag₉₈Pd₂ | Δ | ⊕ | ⊕ | ○ | ⊕ |
| 6 | CrSi₂ | Ag₉₈Nd₂ | Δ | O | ⊕ | ○ | ⊕ |
| 7 | CrSi₂ | Ag₉₈Ti₂ | × | ⊕ | ⊕ | Δ | ⊕ |
| 8 | MoSi₂ | Ag₉₈In₂ | ○ | ⊕ | ⊕ | ⊕ | ⊕ |
| 9 | ZrSi₂ | Ag₉₈In₂ | ○ | ⊕ | ⊕ | ⊕ | ⊕ |
| 10 | Ge₈₀Cr₂₀ | Ag₉₈In₂ | ○ | ⊕ | × | ○ | ⊕ |
| 11 | Ge₈₀Cr₂₀ | Ag₉₈Pd₂ | Δ | ⊕ | O | Δ | ⊕ |
| 12 | Cr | Ag₉₈In₂ | ⊕ | O | O | ⊕ | Δ |
| 13 | Al₉₈Cr₂ | Ag₉₈In₂ | Δ | O | ⊕ | O | × |

### Key to Symbols

| Symbol | C/N ratio | Erasure rate | Noise increase |
|---|---|---|---|
| ⊕ | 54 dB or more | 33 dB or more | less than 0.5 dB |
| ○ | 52 dB or more and less than 54dB | 30 dB or more and less than 33dB | 0.5 dB or more and less than 1.0dB |
| Δ | 50 dB or more and less than 52dB | 27 dB or more and less than 30dB | 1.0 dB or more and less than 3.0dB |
| × | less than 50 dB | less than 27 dB | 3.0 dB or more |

These disks were rotated under two sets of conditions, namely, a linear velocity of 8.2 m/s (reference clock T = 17.1 ns) and a linear velocity of 20.5 m/s (reference clock T = 6.9 ns), and recording and reproduction were performed using an optical system with a wavelength of 660 nm and a NA of 0.6. At both linear velocities, 3T signals and 11T signals were alternately recorded eleven times to the grooves and lands, the track was reproduced in a state in which the 3T signal had been recorded, and the C/N ratio was measured with a spectrum analyzer. Also, to examine the reliability of the disks, 3T signals were recorded at a linear velocity of 8.2 m/s, after which each disk was placed in a thermostatic, hygrostatic tank kept at 90°C and 80% RH, stored for 100 hours, and then taken out and the C/N ratio measured again.
The laser modulation waveform in the recording of signals was a single rectangular pulse with a width of 1.5T (power level P1) in the case of 3T signals, and was a pulse string (power level P1) composed of a leading pulse with a width of 1.5T and eight sub-pulses with a width of 0.5T that follow thereafter in the case of 11T signals, with the width between these pulses (power level P3) being 0.5T. Continuous light of power level P2 was used for portions where no mark was to be recorded. At a linear velocity of 8.2 m/s, P3 = P2, and at a linear velocity of 20.5 m/s, P3 = P2 + 1 mW. The various power levels were determined as follows. The recording power level P1 was 1.5 times the lower limit value of the power at which the C/N ratio exceeded 45 dB, the power level P2 was the median value in the power range at which the erasure rate exceeded 20 dB, and the reproduction power level P5 was 1.0 mW.
Table 1 shows the results of measuring the C/N ratio and erasure rate of each disk under the above conditions. There was no great difference in the C/N ratio and erasure rate between grooves and lands on any of the disks, but Table 1 shows the lower value. Also, no great change was seen in the carrier level in the measurement of the C/N ratio before and after storage for 100 hours at 90°C and 80% RH, so the increase in noise level is also given in Table 1.
In Table 1, good values were obtained for both C/N ratio and erasure rate with disk 1 at both linear velocities, and no increase in noise was seen after storage. In contrast, with disks 2 and 3, in which the amount of indium added to the reflective layer was 0.5 at% and 4 at%, respectively, a certain amount of difference was noted in C/N ratio and erasure rate, but posed no particular problem. On the other hand, with disk 4, in which the amount of added indium was increased to 8 at%, the C/N ratio was clearly lower, and it can be seen that a decrease in thermal conductivity resulted in unsatisfactory cooling.
With disks 5 to 7, in which the elements added to the silver in the reflective layer were changed, the C/N ratio was low, and this is also believed to be attributable to a decrease in thermal conductivity. With disks 8 and 9, the optical absorption layer was changed to another silicon-based material, but good characteristics were exhibited just as with disk 1. In contrast, with disk 10, in which a germanium-based material was used instead of a silicon-based material for the optical absorption layer, there was a pronounced increase in noise after storage, which is believed to be attributable to corrosion or to atomic diffusion between the optical absorption layer and the reflective layer. With disk 11, in which the optical absorption layer was again composed of a germanium-based material, the increase in noise after storage was suppressed by changing the element added to the silver of the reflective layer, but a decrease was noted in the C/N ratio, which is believed to be due to a decrease in thermal conductivity. With disks 12 and 13, in which the optical absorption layer was changed to a material with a higher thermal conductivity than a silicon-based material, there was a pronounced decrease in erasure rate, particularly at high speed, and it is believed that the crystallization of the recording layer was inadequate due to excessive quenching. Furthermore, with disk 13, the C/N ratio was also low, perhaps because the optical constants of the optical absorption layer were unfavorable.
It can be seen from the above results that high reliability and good recording and reproduction characteristics can be obtained over a wide range of linear velocity by using an optical absorption layer composed of a material containing at least 50 at% and no more than 95 at% silicon, along with a reflective layer composed of a material containing at least 95 at% silver and no more than 5 at% indium.

### INDUSTRIAL APPLICABILITY

The optical information recording medium and method for manufacturing the same pertaining to the present invention are useful in relation to a recording medium that has high reliability and affords good recording and reproduction characteristics over a wide linear velocity range and high density, as well as a method for manufacturing this recording medium.

## Claims

1. An optical information recording medium, comprising at least a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order on a transparent substrate.

2. An optical information recording medium, comprising n-number of information layers from a first information layer to an n-th information layer (where n is an integer of at least 2) on a transparent substrate, the n-th information layer comprising a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order from the side closest to the transparent substrate.

3. The optical information recording medium according to Claim 1 or 2, wherein the reflective layer is in contact with the optical absorption layer.

4. The optical information recording medium according to any of Claims 1 to 3, wherein the material of the optical absorption layer contains scandium, yttrium, titanium, zirconium, hafnium, vanadium, niobium, tantalum, chromium, molybdenum, or tungsten.

5. The optical information recording medium according to any of Claims 1 to 4, comprising a lower dielectric layer between the transparent substrate and the recording layer.

6. The optical information recording medium according to Claim 5, comprising a lower interface layer between the recording layer and the lower dielectric layer.

7. The optical information recording medium according to Claim 6, wherein the material of the lower interface layer contains two or more compounds selected from among compounds of the elements magnesium, calcium, yttrium, zirconium, hafnium, niobium, tantalum, chromium, molybdenum, tungsten, zinc, aluminum, gallium, indium, and silicon.

8. The optical information recording medium according to any of Claims 1 to 7, comprising an upper dielectric layer between the recording layer and the optical absorption layer.

9. The optical information recording medium according to Claim 6, comprising an upper interface layer between the recording layer and the upper dielectric layer.

10. The optical information recording medium according to Claim 9, wherein the material of the upper interface layer contains two or more compounds selected from among compounds of the elements magnesium, calcium, yttrium, zirconium, hafnium, niobium, tantalum, chromium, molybdenum, tungsten, zinc, aluminum, gallium, indium, and silicon.

11. A method for manufacturing an optical information recording medium comprising at least a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order on a transparent substrate,
wherein the pressure during manufacture is held at 0.01 Pa or lower so that the optical absorption layer and reflective layer are not exposed to the atmosphere while being continuously formed.

12. A method for manufacturing an optical information recording medium comprising n-number of information layers from a first information layer to an n-th information layer (where n is an integer of at least 2) on a transparent substrate, the n-th information layer comprising a recording layer that changes its state to be different and optically detectable by irradiating with a light beam, an optical absorption layer composed of a material containing at least 50 at% and no more than 95 at% silicon, and a reflective layer composed of a material containing at least 95 at% silver and no more than 5 at% indium, with these layers provided in that order from the side closest to the transparent substrate,
wherein the pressure during manufacture is held at 0.01 Pa or lower so that the optical absorption layer and reflective layer are not exposed to the atmosphere while being continuously formed.
